# FASCICULE DE BREVET EUROPEEN

(11) **EP 4 327 107 B1**
(45) Date de publication et mention de la délivrance du brevet: **04.02.2026**
(21) Numéro de dépôt: 22735510.4
(22) Date de dépôt: 21.04.2022
(51) Int. Cl.: G01N 35/04

(54) **SYSTÈME DE TRAITEMENT D'ÉCHANTILLONS BIOLOGIQUES COMPRENANT UN SYSTÈME DE CONVOYAGE DE SUPPORTS POUR RÉCIPIENTS D'ÉCHANTILLONS BIOLOGIQUES**
SYSTEM ZUR BEHANDLUNG BIOLOGISCHER PROBEN MIT EINEM SYSTEM ZUM FÖRDERN VON HALTERN FÜR BIOLOGISCHE PROBENBEHÄLTER
SYSTEM FOR TREATING BIOLOGICAL SAMPLES, COMPRISING A SYSTEM FOR CONVEYING HOLDERS FOR BIOLOGICAL SAMPLE CONTAINERS

(30) Priorité: 22.04.2021 FR 2104223
(43) Date de publication de la demande: 28.02.2024
(73) Titulaire: ARTEION, 75007 Paris (FR)
(72) Inventeur: ROUSSEAU, Alain, 75005 PARIS (FR); CROISÉ, Laurent, 49100 Angers (FR)
(74) Mandataire: Germain Maureau
(86) Numéro de dépôt international: PCT/FR2022/050761
(87) Numéro de publication internationale: WO 2022/223932

(56) Documents cités:
- EP-A1- 2 333 558
- FR-A1- 3 047 082
- JP-A- 2001 174 468
- JP-A- 2001 278 409
- JP-U- S5 794 858

## Description

La présente invention concerne un système de traitement d'échantillons biologiques comprenant un système de convoyage configuré pour convoyer des supports de récipients destinés à supporter des récipients contenant des échantillons biologiques, tels que des échantillons de liquide biologique.

Un tel système de convoyage comprend de façon connue :
- une pluralité de supports de récipients destinés à supporter des récipients contenant des échantillons biologiques à analyser,
- une unité de convoyage configurée pour convoyer les supports de récipients, l'unité de convoyage comportant notamment :
   ∘ un élément de guidage de support définissant un chemin de guidage, l'élément de guidage de support étant configuré pour recevoir un support de récipients et pour guider en translation ledit support de récipients le long du chemin de guidage,
   ∘ un élément de guidage de chariot définissant un chemin de convoyage s'étendant le long de l'élément de guidage de support,
   ∘ un chariot de convoyage autopropulsé déplaçable le long du chemin de convoyage, l'élément de guidage de chariot étant configuré pour guider le chariot de convoyage autopropulsé lors des déplacements du chariot de convoyage autopropulsé le long du chemin de convoyage, le chariot de convoyage autopropulsé étant configuré pour déplacer en translation un support de récipients dans l'élément de guidage de support et le long du chemin de guidage lorsque le chariot de convoyage autopropulsé se déplace le long du chemin de convoyage, et
- une pluralité d'emplacements de réception disposés le long du chemin de guidage, chacun des emplacements de réception étant configuré pour recevoir et stocker au moins temporairement un support de récipients, le chariot de convoyage autopropulsé étant en outre configuré pour déplacer un support de récipients transversalement au chemin de guidage de manière à déplacer ledit support de récipients dans ou hors d'un emplacement de réception.

Un système de traitement d'échantillons biologiques comprenant un tel système de convoyage est par exemple décrit dans le document FR3047082A1.

Un tel système de convoyage limite grandement les manipulations fastidieuses pour un opérateur et assure une capacité de convoyage élevée et une cadence d'analyse élevée, notamment lorsqu'un support de récipients doit être convoyé entre différents dispositifs d'analyse et/ou de mesure.

De plus, en cas de défaillance du chariot de convoyage autopropulsé, il suffit de remplacer ce dernier par un autre chariot de convoyage autopropulsé, ce qui assure une courte durée d'immobilisation du système de convoyage, et limite donc grandement l'indisponibilité, pour le laboratoire d'analyse, d'un système d'analyse biologique équipé d'un tel système de convoyage. Il est également possible d'équiper l'unité de convoyage de deux chariots de convoyage autopropulsés, de telle sorte que l'un des chariots de convoyage autopropulsés peut assurer une permanence pendant le temps de recharge de l'autre chariot de convoyage autopropulsé ou pendant une maintenance de ce dernier. En outre, la présence de deux chariots de convoyage autopropulsés assure une cadence de convoyage accrue.

En outre, puisque le chariot de convoyage est autopropulsé, le chemin de convoyage peut être essentiellement « passif », et donc être défini par un élément de guidage de chariot simple, tel qu'une glissière de guidage, ce qui simplifie grandement le système de convoyage et augmente la fiabilité d'un tel système, en réduit les coûts et permet une installation plus facilement configurable, plus rapide et plus aisée.

Cependant, lorsqu'un support de récipients est entraîné en translation par le chariot de convoyage autopropulsé, les frottements du support de récipients sur l'élément de guidage de support génèrent du bruit qui peut être source d'inconfort pour les opérateurs. De plus, ces frottements augmentent la consommation électrique du chariot de convoyage autopropulsé et nuisent donc à l'autonomie de la batterie du chariot de convoyage autopropulsé.

En outre, lorsqu'un support de récipients est transféré par le chariot de convoyage autopropulsé depuis le chemin de guidage à un emplacement de réception (et donc déplacé perpendiculairement à la direction de convoyage du chariot de convoyage autopropulsé), le support de récipients est susceptible de basculer verticalement, en raison des frottements de la surface inférieure du support de récipients sur l'élément de guidage de support, ce qui peut induire un positionnement non optimal du support de récipients dans l'emplacement de réception et donc nuire à la préhension du support de récipients par un mécanisme de chargement associé à l'emplacement de réception.

Les documents JP2001278409A et WO2015038999A divulguent d'autres systèmes de convoyage connus.

La présente invention vise à remédier à ces inconvénients.

Le problème technique à la base de l'invention consiste donc à fournir un système de traitement d'échantillons biologiques comprenant un système de convoyage qui soit de structure simple, économique et fiable, tout en assurant une capacité de convoyage élevée, une cadence d'analyse optimisée et une maintenabilité simple et rapide.

A cet effet, la présente invention concerne un système de traitement d'échantillons biologiques, tel qu'un système d'analyse biologique, comprenant :
- un système de convoyage comprenant :
   ∘ une pluralité de supports de récipients destinés à supporter des récipients contenant des échantillons biologiques, tels que des échantillons de liquide biologique, chaque support de récipients comportant deux évidements de réception prévus respectivement sur deux faces transversales dudit support de récipients qui sont opposées l'une à l'autre,
   ∘ une unité de convoyage configurée pour convoyer les supports de récipients, l'unité de convoyage comportant un élément de guidage de chariot définissant un chemin de convoyage, et un chariot de convoyage autopropulsé déplaçable le long du chemin de convoyage, l'élément de guidage de chariot étant configuré pour guider le chariot de convoyage autopropulsé lors des déplacements du chariot de convoyage autopropulsé le long du chemin de convoyage, le chariot de convoyage autopropulsé comportant un corps de chariot et étant configuré pour déplacer un support de récipients le long d'un trajet de déplacement lorsque le chariot de convoyage autopropulsé se déplace le long du chemin de convoyage, et
   ∘ une pluralité d'emplacements de réception disposés le long du trajet de déplacement et décalés latéralement par rapport au trajet de déplacement, chacun des emplacements de réception étant configuré pour recevoir et stocker au moins temporairement un support de récipients, le chariot de convoyage autopropulsé étant en outre configuré pour déplacer un support de récipients transversalement au trajet de déplacement de manière à déplacer ledit support de récipients dans ou hors d'un emplacement de réception,
- au moins un dispositif d'analyse et/ou de mesure disposé le long de l'unité de convoyage et configuré pour réaliser des tests sanguins,
caractérisé en ce que le chariot de convoyage autopropulsé comporte deux bras de préhension espacés l'un de l'autre et montés mobiles entre au moins une position de préhension dans laquelle les bras de préhension sont rapprochés l'un de l'autre et sont configurés pour saisir et soulever un support de récipients disposé dans l'un des emplacements de réception, et une position de libération dans laquelle les bras de préhension sont écartés l'un de l'autre et sont configurés pour libérer le support de récipients et déposer le support de récipients dans l'un des emplacements de réception, le chariot de convoyage autopropulsé étant configuré pour déplacer un support de récipients, saisi et soulevé par les bras de préhension, le long du trajet de déplacement lorsque le chariot de convoyage autopropulsé se déplace le long du chemin de convoyage, et en ce que chacun des bras de préhension comporte un organe de soulèvement, les organes de soulèvement étant configurés pour être reçus respectivement dans les deux évidements de réception prévus sur les deux faces transversales d'un support de récipients et pour soulever ledit support de récipients lorsque les bras de préhension sont déplacés dans la position de préhension.

Une telle configuration du système de convoyage, et en particulier du chariot de convoyage autopropulsé, permet de déplacer un support de récipients à distance de l'élément de guidage de chariot et de ce fait d'éviter tout frottement entre le support de récipients et l'élément de guidage de chariot lors des déplacements du support de récipients le long du trajet de déplacement et également lors des déplacements du support de récipients transversalement au trajet de déplacement (par exemple lors du chargement du support de récipients dans un emplacement de réception).

Il en résulte une meilleure autonomie de la batterie du chariot de convoyage autopropulsé et donc des cycles de charge électrique de la batterie plus espacés dans le temps. Ainsi, les périodes d'immobilisation du chariot de convoyage autopropulsé sont fortement réduites.

En outre, l'absence de frottement entre un support de récipients et l'élément de guidage de chariot lors des déplacements dudit support de récipients le long du trajet de déplacement réduit sensiblement le bruit généré par le système de convoyage, et améliore grandement le confort d'un opérateur.

De plus, l'absence de frottement entre un support de récipients et l'élément de guidage de chariot lors des déplacements dudit support de récipients transversalement au trajet de déplacement (en particulier lors du chargement du support de récipients dans un emplacement de réception) assure un positionnement optimal dudit support de récipients dans un emplacement de réception, et par conséquent une préhension optimale dudit support de récipients par un mécanisme de chargement associé à l'emplacement de réception.

Ainsi, le système de convoyage du système de traitement d'échantillons biologiques selon la présente invention présente une fiabilité accrue par rapport aux systèmes de convoyage de l'art antérieur, tout en assurant une capacité de convoyage et une cadence d'analyse encore améliorées.

Le système de traitement d'échantillons biologiques peut en outre présenter une ou plusieurs des caractéristiques suivantes, prises seules ou en combinaison.

Selon un mode de réalisation de l'invention, le trajet de déplacement s'étend à côté du chemin de convoyage.

Selon un mode de réalisation de l'invention, les deux bras de préhension sont configurés pour enserrer un support de récipients lorsqu'ils occupent la position de préhension.

Selon un mode de réalisation de l'invention, les deux bras de préhension font saillie d'une face latérale du corps de chariot lorsque les deux bras de préhension occupent la position de préhension.

Selon un mode de réalisation de l'invention, le chariot de convoyage autopropulsé est configuré de telle sorte que, lorsqu'un support de récipients est convoyé par le chariot de convoyage autopropulsé le long du trajet de déplacement, ledit support de récipients s'étend en regard d'une face latérale du corps de chariot, et plus particulière de la face latérale de laquelle font saillie les deux bras de préhension lorsqu'ils occupent la position de préhension.

Selon un mode de réalisation de l'invention, chacun des bras de préhension est monté pivotant autour d'un axe de pivotement respectif qui est sensiblement vertical.

Selon un mode de réalisation de l'invention, les bras de préhension sont déplaçables dans un plan de déplacement qui est sensiblement horizontal.

Selon un mode de réalisation de l'invention, chacun des bras de préhension comporte une partie de préhension configurée pour exercer une force d'appui contre une face transversale respective d'un support de récipients lorsque les bras de préhension sont dans la position de préhension.

Selon un mode de réalisation de l'invention, chaque partie de préhension est située à une extrémité libre du bras de préhension respectif.

Selon un mode de réalisation de l'invention, chaque évidement de réception est prévu dans une partie supérieure de la face transversale respective.

Selon un mode de réalisation de l'invention, chaque partie de préhension comporte une surface d'appui configurée pour exercer une force d'appui contre une face transversale respective d'un support de récipients lorsque les bras de préhension sont dans la position de préhension, chaque organe de soulèvement s'étendant à partir de la surface d'appui d'une partie de préhension respective.

Selon un mode de réalisation de l'invention, chacun des organes de soulèvement comporte une rampe de soulèvement qui est inclinée par rapport à la verticale, les deux rampes de soulèvement étant configurées pour soulever un support de récipients lorsque les bras de préhension sont déplacés dans la position de préhension.

Selon un mode de réalisation de l'invention, le système de convoyage comprend au moins une zone de réception disposée le long du trajet de déplacement et comportant un premier emplacement de réception et un deuxième emplacement de réception qui sont décalés l'un par rapport à l'autre le long du trajet de déplacement et qui sont chacun configurés pour recevoir et stocker au moins temporairement un support de récipients.

Selon un mode de réalisation de l'invention, l'au moins une zone de réception comporte une première paroi de guidage et une deuxième paroi de guidage décalées l'une par rapport à l'autre selon une direction qui s'étend transversalement au trajet de déplacement, les première et deuxième parois de guidage définissant un chemin de guidage s'étendant le long du trajet de déplacement et les premier et deuxième emplacements de réception étant disposés respectivement à des extrémités opposées du chemin de guidage, la première paroi de guidage, qui sépare le trajet de déplacement et le chemin de guidage, comportant une ouverture de passage qui est située en regard de la deuxième paroi de guidage et qui est destinée au passage d'un support de récipients, le chariot de convoyage autopropulsé étant configuré pour déplacer un support de récipients, saisi et soulevé par les bras de préhension, à travers l'ouverture de passage et le long du chemin de guidage.

Selon un mode de réalisation de l'invention, les première et deuxième parois de guidage s'étendent respectivement dans un premier plan d'extension et dans un deuxième plan d'extension qui sont sensiblement verticaux et parallèles au trajet de déplacement.

Selon un mode de réalisation de l'invention, les première et deuxième parois de guidage sont configurées pour guider en translation un support de récipients le long du chemin de guidage.

Selon un mode de réalisation de l'invention, le chariot de convoyage autopropulsé comporte un élément de support sur lequel sont montés mobiles les bras de préhension, l'élément de support étant monté mobile en translation par rapport au corps de chariot selon une direction de déplacement qui est transversale au chemin de convoyage et entre au moins une position de convoyage dans laquelle le chariot de convoyage autopropulsé est configuré pour déplacer un support de récipients, saisi et soulevé par les bras de préhension, le long du trajet de déplacement et une position de transfert dans laquelle le chariot de convoyage autopropulsé est configuré pour saisir et soulever un support de récipients disposé dans un emplacement de réception ou pour libérer et déposer un support de récipients dans un emplacement de réception.

Selon un mode de réalisation de l'invention, lorsque l'élément de support occupe la position de convoyage et les bras de préhension occupent la position de préhension, chacun des bras de préhension fait saillie de la face latérale du corps de chariot d'une première distance, et, lorsque l'élément de support occupe la position de transfert et les bras de préhension occupent la position de préhension, chacun des bras de préhension fait saillie de la face latérale du corps de chariot d'une deuxième distance qui est supérieure à la première distance.

Selon un mode de réalisation de l'invention, l'élément de guidage de chariot comporte deux rails de guidage configurés pour coopérer avec une surface inférieure du chariot de convoyage autopropulsé lors des déplacements du chariot de convoyage autopropulsé le long du chemin de convoyage.

Selon un mode de réalisation de l'invention, le système de convoyage comprend un dispositif de stockage disposé le long du trajet de déplacement et configuré pour stocker des supports de récipients, au moins un des emplacements de réception étant disposé à proximité du dispositif de stockage.

Selon un mode de réalisation de l'invention, le dispositif de stockage comprend un mécanisme de déplacement configuré pour déplacer un support de récipients, stocké dans le dispositif de stockage, dans l'au moins un emplacement de réception situé à proximité du dispositif de stockage.

Selon un mode de réalisation de l'invention, le système de convoyage comporte une unité de commande configurée pour communiquer à distance avec le chariot de convoyage autopropulsé. L'unité de commande peut être un ordinateur, par exemple de type PC.

Selon un mode de réalisation de l'invention, l'unité de commande est configurée pour communiquer sans fil, par exemple par wifi ou Bluetooth, avec le chariot de convoyage autopropulsé.

Selon un mode de réalisation de l'invention, les deux bras de préhension du chariot de convoyage autopropulsé sont configurés pour occuper une première position de préhension dans laquelle les deux bras de préhension font saillie d'une première face latérale du corps de chariot et sont configurés pour saisir et soulever un support de récipients disposé d'un premier côté du chemin de convoyage, et une deuxième position de préhension dans laquelle les deux bras de préhension font saillie d'une deuxième face latérale du corps de chariot et sont configurés pour saisir et soulever un support de récipients disposé d'un deuxième côté du chemin de convoyage.

Selon un mode de réalisation de l'invention, le chariot de convoyage autopropulsé comprend au moins une roue motrice configurée pour rouler sur l'élément de guidage de chariot, et au moins un mécanisme d'entraînement en rotation configuré pour entraîner en rotation l'au moins une roue motrice.

Selon un mode de réalisation de l'invention, le chariot de convoyage autopropulsé comporte une première paire de roues motrices qui sont situées à proximité d'une première extrémité longitudinale du corps de chariot, et une deuxième paire de roues motrices qui sont situées à proximité d'une deuxième extrémité longitudinale du corps de chariot. Selon une variante de réalisation d'invention, le chariot de convoyage autopropulsé pourrait comporter uniquement deux roues motrices disposées respectivement à proximité des première et deuxième extrémités longitudinales du corps de chariot.

Selon un mode de réalisation de l'invention, le chariot de convoyage autopropulsé est déplaçable le long du chemin de convoyage dans un premier sens de déplacement et dans un deuxième sens de déplacement opposé au premier sens de déplacement.

Selon un mode de réalisation de l'invention, le chemin de convoyage est sensiblement rectiligne. Toutefois, selon une variante de réalisation de l'invention, le chemin de convoyage pourrait être formé par une pluralité de segments rectilignes agencés de telle sorte que deux segments rectilignes successifs soient disposés à 90° l'un par rapport à l'autre, et l'unité de convoyage pourrait comporter une pluralité de chariots de convoyage autopropulsés configurés chacun pour se déplacer le long d'un segment rectiligne respectif, le passage d'un support de récipients d'un segment rectiligne à un autre segment rectiligne étant réalisé par un rotor de transfert ayant un axe de rotation sensiblement vertical et comportant une pluralité de logements de stockage configurés chacun pour recevoir un support de récipients.

Selon un mode de réalisation de l'invention, le chariot de convoyage autopropulsé est configuré pour déplacer un support de récipients le long du trajet de déplacement selon une direction de déplacement qui est sensiblement parallèle à une direction d'extension du support de récipients.

Selon un mode de réalisation de l'invention, le chariot de convoyage autopropulsé est configuré pour maintenir le support de récipients sensiblement vertical lors de ses déplacements le long du chemin de convoyage.

Selon un mode de réalisation de l'invention, lorsque les deux bras de préhension occupent la position de préhension, les deux bras de préhension sont espacés l'un de l'autre d'une distance correspondant sensiblement à la longueur d'un support de récipients.

Selon un mode de réalisation de l'invention, les deux bras de préhension sont configurés pour coopérer respectivement avec des parois latérales opposées d'un support de récipients.

Selon un mode de réalisation de l'invention, le chariot de convoyage autopropulsé comporte un dispositif d'actionnement configuré pour déplacer les deux bras de préhension entre les positions de préhension et de libération.

Selon un mode de réalisation de l'invention, le dispositif d'actionnement est configuré pour faire pivoter chacun des bras de préhension autour de son axe de pivotement. Le dispositif d'actionnement peut par exemple comporter deux moteurs qui sont chacun couplés en rotation à un bras de préhension respectif.

Selon un mode de réalisation de l'invention, le système de convoyage comporte au moins un repère de positionnement disposé sur le chemin de convoyage, et le chariot de convoyage autopropulsé comporte des moyens de détection agencés pour détecter l'au moins un repère de positionnement, et des moyens de commande agencés pour commander une immobilisation du chariot de convoyage autopropulsé lorsque les moyens de détection détectent l'au moins un repère de positionnement. Le système de convoyage comporte par exemple au moins un repère de positionnement disposé en regard de chaque emplacement de réception.

Selon un mode de réalisation de l'invention, le chariot de convoyage autopropulsé comporte des moyens de détermination configurés pour déterminer la position du chariot de convoyage autopropulsé le long du chemin de convoyage en fonction de la distance parcourue par le chariot de convoyage autopropulsé.

Selon un mode de réalisation de l'invention, l'élément de support et les bras de préhension sont configurés de telle sorte que, lorsque le chariot de convoyage autopropulsé est disposé en regard de l'au moins une zone de réception et les bras de préhension sont dans la position de préhension, un déplacement de l'élément de support de la position de convoyage à la position de transfert entraîne un déplacement du support de récipients du trajet de déplacement à l'au moins une zone de réception.

Selon un mode de réalisation de l'invention, l'élément de support et les bras de préhension sont configurés de telle sorte que, lorsque le chariot de convoyage autopropulsé est disposé en regard de l'au moins une zone de réception et les bras de préhension sont dans la position de préhension, un déplacement de l'élément de support de la position de transfert à la position de convoyage entraîne un déplacement du support de récipients de la zone de réception au trajet de déplacement.

Selon un mode de réalisation de l'invention, le chariot de convoyage autopropulsé comporte un mécanisme d'entraînement en translation configuré pour déplacer en translation l'élément de support par rapport au corps de chariot.

Selon un mode de réalisation de l'invention, le chariot de convoyage autopropulsé comporte une batterie configurée pour alimenter électriquement le chariot de convoyage autopropulsé. Avantageusement, la batterie est rechargeable. Par exemple, la batterie peut être rechargée par contact ou par induction.

Selon un mode de réalisation de l'invention, le système de convoyage comporte une zone de rechargement comportant un dispositif de rechargement électrique configuré pour recharger électriquement la batterie lorsque le chariot de convoyage autopropulsé est situé dans la zone de rechargement. La zone de rechargement est par exemple située à une extrémité du chemin de convoyage.

Selon un mode de réalisation de l'invention, l'au moins un dispositif d'analyse et/ou de mesure comporte un module de chargement configuré pour charger, dans l'au moins un dispositif d'analyse et/ou de mesure, un support de récipients déposé par le chariot de convoyage autopropulsé dans le premier emplacement de réception d'une zone de réception associée à l'au moins un dispositif d'analyse et/ou de mesure, et un module de déchargement configuré pour déplacer un support de récipients, préalablement chargé dans l'au moins un dispositif d'analyse et/ou de mesure, dans le deuxième emplacement de réception de ladite zone de réception.

Selon un mode de réalisation de l'invention, l'au moins un dispositif d'analyse et/ou de mesure comporte au moins un module parmi un module de lecture spectrophotométrique, un module de lecture par fluorescence, un module de lecture par luminescence, un module de mesure de coagulation et un module de cytométrie.

Selon un mode de réalisation de l'invention, l'au moins un dispositif d'analyse et/ou de mesure comporte un dispositif d'agitation de support, le module de chargement de l'au moins un dispositif de transfert étant configuré pour transférer un support de récipients du premier emplacement de réception au dispositif d'agitation.

De toute façon l'invention sera bien comprise à l'aide de la description qui suit en référence au dessin schématique annexé représentant, à titre d'exemple non limitatif, une forme d'exécution de ce système de traitement d'échantillons biologiques.
Figure 1 est une vue en perspective d'un système d'analyse biologique pour diagnostic in vitro selon l'invention.
Figure 2 est une vue en perspective d'un chariot de convoyage autopropulsé appartenant au système d'analyse biologique de la figure 1.
Figure 3 est une vue de dessous du chariot de convoyage autopropulsé de la figure 2.
Figure 4 est une vue en perspective du chariot de convoyage autopropulsé de la figure 2 en cours de préhension d'un support de récipients appartenant au système d'analyse biologique de la figure 1.
Figure 5 est une vue partielle en perspective de dessus du chariot de convoyage autopropulsé de la figure 2 en cours de préhension d'un support de récipients.
Figure 6 est une vue partielle en perspective, à l'échelle agrandie, du chariot de convoyage autopropulsé de la figure 2 en cours de préhension d'un support de récipients.
Figure 7 est une vue en perspective tronquée du chariot de convoyage autopropulsé de la figure 2.
Figure 8 est une vue en perspective du chariot de convoyage autopropulsé de la figure 2, dans laquelle une carrosserie du chariot de convoyage autopropulsé a été déposée.
Figure 9 est une vue en perspective du chariot de convoyage autopropulsé de la figure 2, dans laquelle la carrosserie supérieure du chariot de convoyage autopropulsé de chariot a été déposée.
Figure 10 est une vue en perspective du support de récipients de la figure 5.
Figure 11 est une vue partielle en perspective du système d'analyse biologique de la figure 1 montrant le chariot de convoyage autopropulsé convoyant un support de récipients en direction d'une zone de réception associée à un dispositif d'analyse et/ou de mesure.
Figure 12 est une vue partielle en perspective du système d'analyse biologique de la figure 1 montrant le chariot de convoyage autopropulsé en regard d'une ouverture de passage appartenant à une zone de réception associée à un dispositif d'analyse et/ou de mesure.
Figure 13 est une vue partielle en perspective du système d'analyse biologique de la figure 1 montrant le chariot de convoyage autopropulsé insérant un support de récipients dans un chemin de guidage appartenant à une zone de réception associée à un dispositif d'analyse et/ou de mesure.
Figure 14 est une vue partielle en perspective du système d'analyse biologique de la figure 1 montrant le chariot de convoyage autopropulsé déplaçant un support de récipients le long d'un chemin de guidage et en direction d'un premier emplacement de réception respectif.
Figure 15 est une vue partielle en perspective du système d'analyse biologique de la figure 1 montrant un support de récipients reçu dans un premier emplacement de réception d'une zone de réception.
Figure 16 est une vue partielle en perspective du système d'analyse biologique de la figure 1 montrant le chariot de convoyage autopropulsé convoyant un support de récipients le long d'un trajet de déplacement.
Figure 17 est une vue de côté du chariot de convoyage autopropulsé de la figure 2 en cours de préhension d'un support de récipients.
Figure 18 est une vue de côté du chariot de convoyage autopropulsé de la figure 2 ayant saisi et soulevé un support de récipients.

Dans le présent document, les termes « horizontal » et « vertical » sont employés pour décrire le chariot de convoyage autopropulsé et font références au chariot de convoyage autopropulsé en situation d'usage lorsqu'il repose par ses roues motrices sur une surface plate et horizontale.

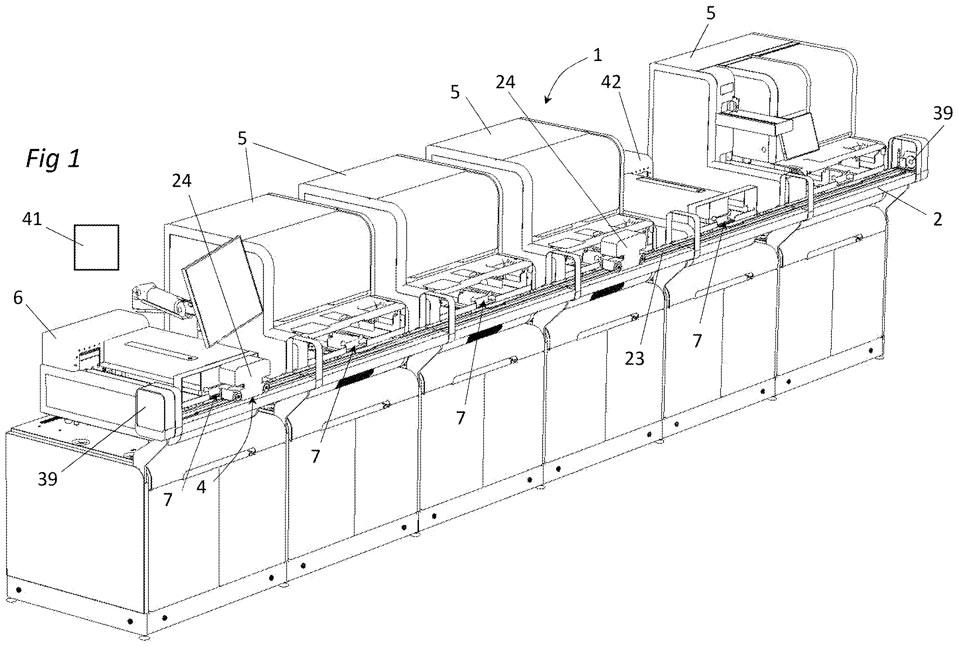

La figure 1 représente un système d'analyse biologique 1, et plus particulièrement un système automatisé d'analyse biologique, pour diagnostic in vitro comprenant un système de convoyage 2 qui comporte une pluralité de supports de récipients 3 et une unité de convoyage 4 configurée pour convoyer les supports de récipients 3. Le système d'analyse biologique 1 comporte en outre une pluralité de dispositifs d'analyse et/ou de mesure 5 disposés le long de l'unité de convoyage 4 et configurés pour réaliser des tests sanguins.

Chaque dispositif d'analyse et/ou de mesure 5 peut par exemple comporter un ou plusieurs modules choisis notamment parmi un module de lecture spectrophotométrique, un module de lecture par fluorescence, un module de lecture par luminescence, un module de cytométrie et un module de mesure de coagulation.

Le système de convoyage 2 comprend également un dispositif de stockage 6, également nommé dispositif de chargement, disposé le long de l'unité de convoyage 4 et configuré pour stocker des supports de récipients 3.

Le système de convoyage 2 comprend en outre plusieurs zones de réception 7 qui sont disposées le long de l'unité de convoyage 4 et qui comportent chacune au moins un emplacement de réception 8 qui est configuré pour recevoir et stocker au moins temporairement un support de récipients 3.

De façon avantageuse, une zone de réception 7 est située à proximité du dispositif de stockage 6, et une zone de réception 7 est située à proximité de chacun des dispositifs d'analyse et/ou de mesure 5.

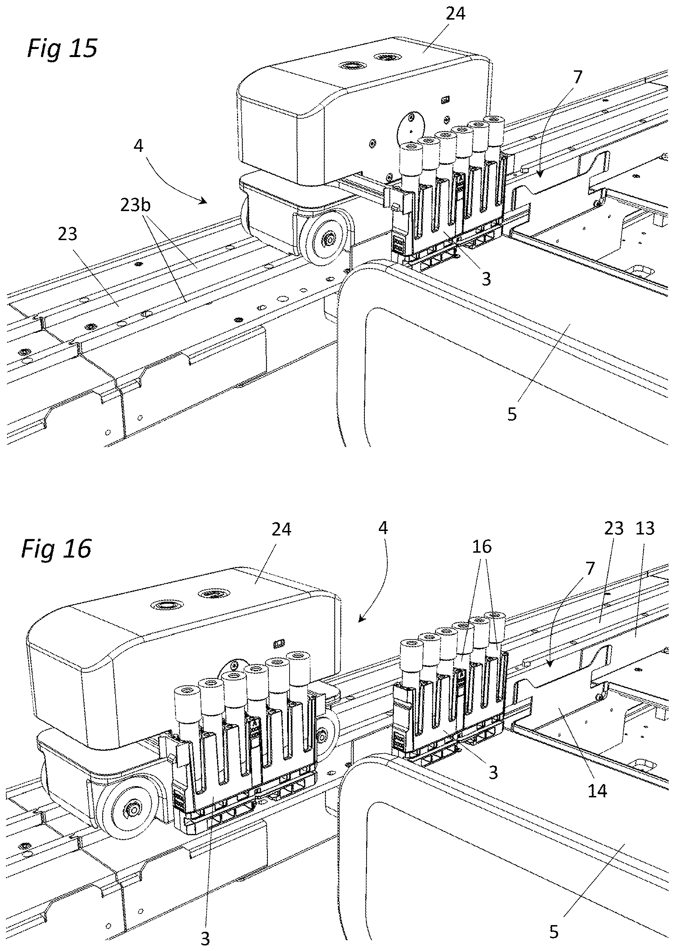

Selon le mode de réalisation représenté sur les figures, chacune des zones de réception 7 (voir les figures 1 et 11 à 16) comporte deux emplacements de réception 8, à savoir un premier emplacement de réception 8.1 et un deuxième emplacement de réception 8.2 qui sont décalés l'un par rapport à l'autre le long de l'unité de convoyage 4. De façon avantageuse, chaque dispositif d'analyse et/ou de mesure 5 comporte un module de chargement (non représenté sur les figures) configuré pour charger, dans ledit dispositif d'analyse et/ou de mesure 5, un support de récipients 3 disposé dans le premier emplacement de réception 8.1 de la zone de réception 7 respective, et un module de déchargement (non représenté sur les figures) configuré pour déplacer un support de récipients 3, préalablement chargé dans ledit dispositif d'analyse et/ou de mesure 5, dans le deuxième emplacement de réception 8.2 de la zone de réception 7 respective. De façon similaire, le dispositif de stockage 6 comprend un mécanisme de déplacement (non représenté sur les figures) configuré pour déplacer un support de récipients 3, stocké dans le dispositif de stockage 6, dans le deuxième emplacement de réception 8.2 de la zone de réception 7 respective.

Selon le mode de réalisation représenté sur les figures, chaque zone de réception 7 comporte une première paroi de guidage 13 et une deuxième paroi de guidage 14 qui sont décalées l'une par rapport et qui s'étendent sensiblement verticalement. Les première et deuxième parois de guidage 13, 14 définissent un chemin de guidage s'étendant le long de l'unité de convoyage 4, et sont configurées pour guider en translation un support de récipients 3 le long du chemin de guidage. De façon avantageuse, les premier et deuxième emplacements de réception 8.1, 8.2 de ladite zone de réception 7 sont disposés respectivement à des extrémités opposées du chemin de guidage respectif, et la première paroi de guidage 13 comporte une ouverture de passage 15 qui est située en regard de la deuxième paroi de guidage 14 respective et qui est destinée au passage d'un support de récipients 3.

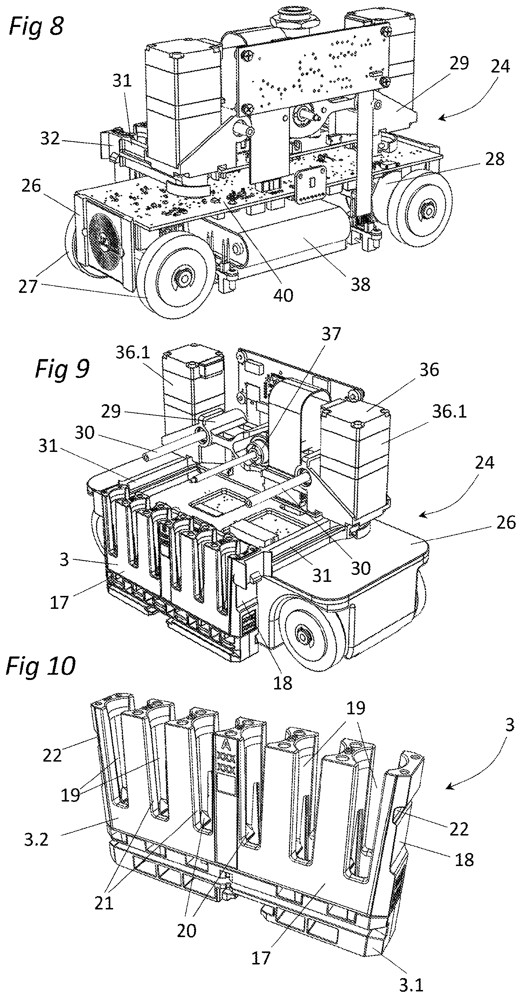

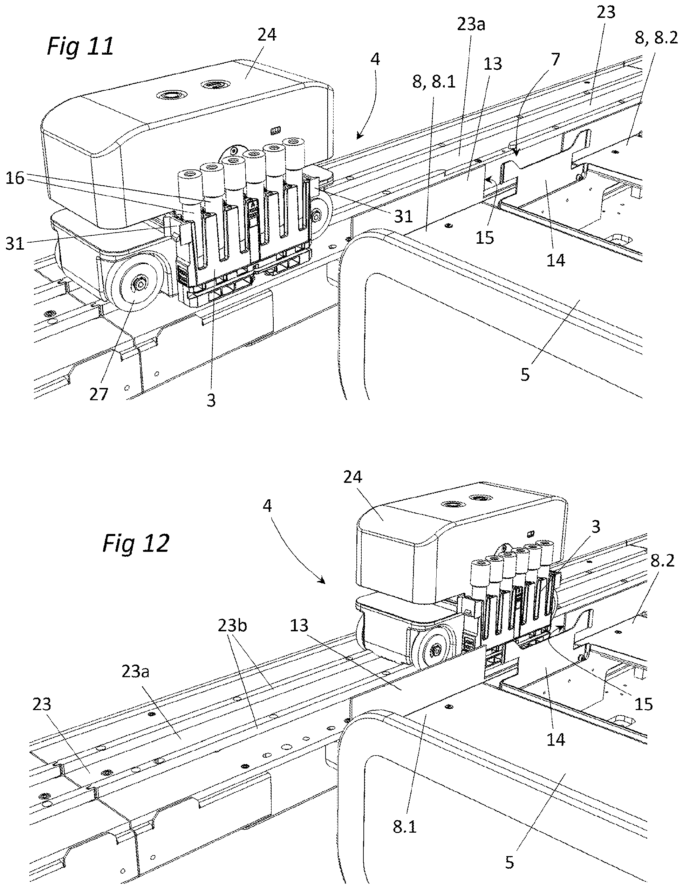

Comme montré plus particulièrement sur les figures 10 et 11, chaque support de récipients 3, également appelé casier, cassette ou portoir, est destiné à supporter une pluralité de récipients 16 contenants des échantillons de liquide biologique à analyser, tels que des échantillons de sang, de plasma ou encore de sérum sanguin. Avantageusement, les récipients 16 sont des tubes d'échantillons.

Chaque support de récipients 3 présente une forme générale parallélépipédique, et s'entend selon direction d'extension. Chaque support de récipients 3 comporte plus particulièrement deux faces longitudinales 17 opposées l'une à l'autre, et deux faces transversales 18 opposées l'une à l'autre.

Chaque support de récipients 3 comporte une embase 3.1 et une partie de réception de récipients 3.2. De façon avantageuse, la partie de réception de récipients 3.2 de chaque support de récipients 3 présente un plan de symétrie s'étendant transversalement à la direction d'extension dudit support de récipients 3. Ainsi, un support de récipients 3 peut être chargé indifféremment dans le dispositif de stockage 6.

Chaque support de récipients 3 comporte une pluralité de logements de réception 19, de préférence cylindriques, alignés selon la direction d'extension dudit support de récipients 3. Les logements de réception 19 sont avantageusement ouverts vers le haut afin de permettre une introduction et un retrait aisés des récipients 16 dans et hors des logements de réception 19. De façon avantageuse, la partie inférieure de chaque logement de réception 19 est équipée d'organes de retenue 20, par exemple élastiquement déformables, configurés pour retenir un récipient 16 dans ledit logement de réception 19. Une telle disposition des organes de retenue 20 permet d'éviter un endommagent de codes d'identification portés par les récipients 16 et par exemple prévus sur des étiquettes d'identification.

Chaque support de récipients 3 comprend une pluralité de fenêtres de lecture 21 permettant une lecture optique de codes d'identification portés par les récipients 16 reçus sur ledit support de récipients 3. De façon avantageuse, deux fenêtres de lecture 21 sont associées à chaque logement de réception 19 afin de permettre une lecture optique depuis chaque côté du support de récipients 3.

Chaque support de récipients 3 comprend également deux évidements de réception 22 prévus respectivement sur deux faces transversales 18 dudit support de récipients 3 et dont la fonction sera explicitée ci-après. De façon avantageuse, chaque évidement de réception 22 est prévu dans une partie supérieure de la face transversale 18 respective.

Comme montré sur les figures 11 à 16, l'unité de convoyage 4 comprend un élément de guidage de chariot 23 définissant un chemin de convoyage qui est rectiligne. L'élément de guidage de chariot 23 peut par exemple comporter une surface de support 23a, qui est horizontale et plane, et deux rails de guidage 23b fixés à la surface de support 23a. De façon avantageuse, le chemin de convoyage est parallèle aux première et deuxième parois de guidage 13, 14 appartenant à chaque zone de réception 7. Selon une variante de réalisation de l'invention, le chemin de convoyage pourrait toutefois présenter un rayon de courbure.

L'unité de convoyage 4 comprend de plus un chariot de convoyage autopropulsé 24 qui est déplaçable le long du chemin de convoyage. Le chariot de convoyage autopropulsé 24 est configuré pour déplacer un support de récipients 3 le long d'un trajet de déplacement, qui est parallèle au chemin de convoyage, lorsque le chariot de convoyage autopropulsé 24 se déplace le long du chemin de convoyage, et pour déplacer un support de récipients 3 transversalement au trajet de déplacement de manière à déplacer ledit support de récipients 3 dans ou hors d'un emplacement de réception 8 qui est décalé latéralement par rapport au trajet de déplacement. De façon avantageuse, le chariot de convoyage autopropulsé 24 est configuré pour maintenir un support de récipients 3 sensiblement vertical lors de son déplacement le long du trajet de déplacement.

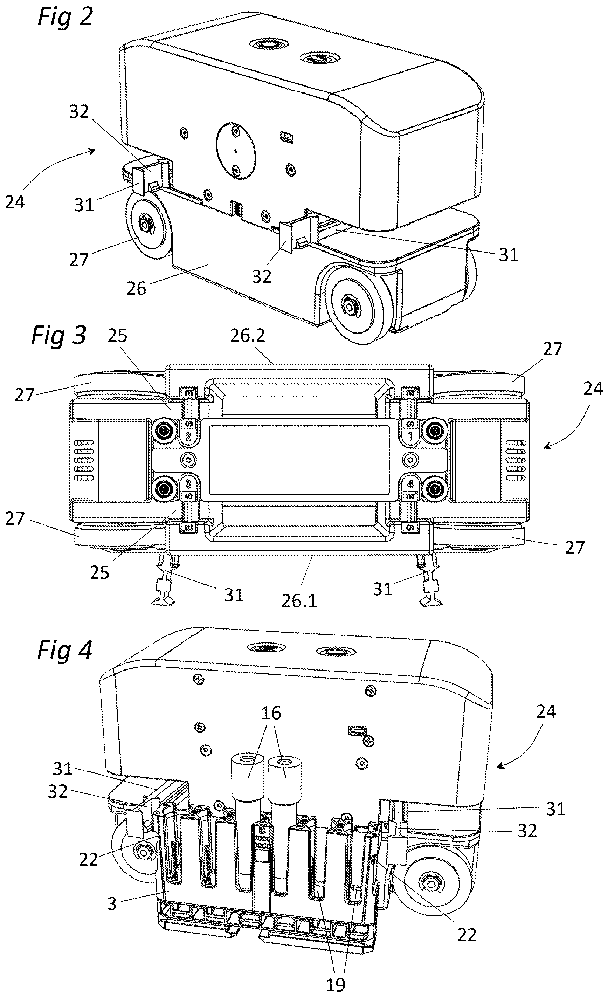

L'élément de guidage de chariot 23 est plus particulièrement configuré pour guider le chariot de convoyage autopropulsé 24 lors de ses déplacements le long du chemin de convoyage. De façon avantageuse, les deux rails de guidage 23b sont configurés pour coopérer avec deux rainures de guidage 25 (voir la figure 3) prévues sur une surface inférieure du chariot de convoyage autopropulsé 24.

Comme montré plus particulièrement sur les figures 2 et 3, le chariot de convoyage autopropulsé 24 comporte un corps de chariot 26, et des roues motrices 27 montées rotatives sur le corps de chariot 26 et configurées pour rouler sur la surface de support 23a de l'élément de guidage de chariot 23. Chaque roue motrice 27 présente un axe de rotation s'étendant sensiblement horizontalement. De façon avantageuse, le chariot de convoyage autopropulsé 24 comporte une paire de roues motrices qui sont situées à proximité d'une première extrémité longitudinale du corps de chariot 26, et une paire de roues motrices qui sont situées à proximité d'une deuxième extrémité longitudinale du corps de chariot 26.

Le chariot de convoyage autopropulsé 24 comporte un mécanisme d'entraînement en rotation 28 configuré pour entraîner en rotation les roues motrices 27. Le mécanisme d'entraînement en rotation 28 comprend par exemple un moteur d'entraînement couplé en rotation aux roues motrices 27.

Chaque roue motrice 27 peut être entraînée en rotation dans un premier sens de rotation et dans un deuxième sens de rotation opposé au premier sens de rotation. Ainsi, le chariot de convoyage autopropulsé 24 est déplaçable le long du chemin de convoyage dans un premier sens de déplacement et dans un deuxième sens de déplacement opposé au premier sens de déplacement.

Le chariot de convoyage autopropulsé 24 comporte en outre un élément de support 29, par exemple sous la forme d'un châssis de support, monté mobile en translation par rapport au corps de chariot 26 selon une direction de déplacement horizontale et perpendiculaire au chemin de convoyage. De façon avantageuse, l'élément de support 29 est guidé en translation par une paire de tiges de guidage 30.

Le chariot de convoyage autopropulsé 24 comporte également deux bras de préhension 31 espacés l'un de l'autre selon une direction longitudinale du chariot de convoyage autopropulsé 24. Les deux bras de préhension 31 sont montés pivotants sur l'élément de support 29 respectivement autour de deux axes de pivotement qui sont verticaux. De façon avantageuse, les deux bras de préhension 31 sont déplaçables dans un plan de déplacement qui est sensiblement horizontal.

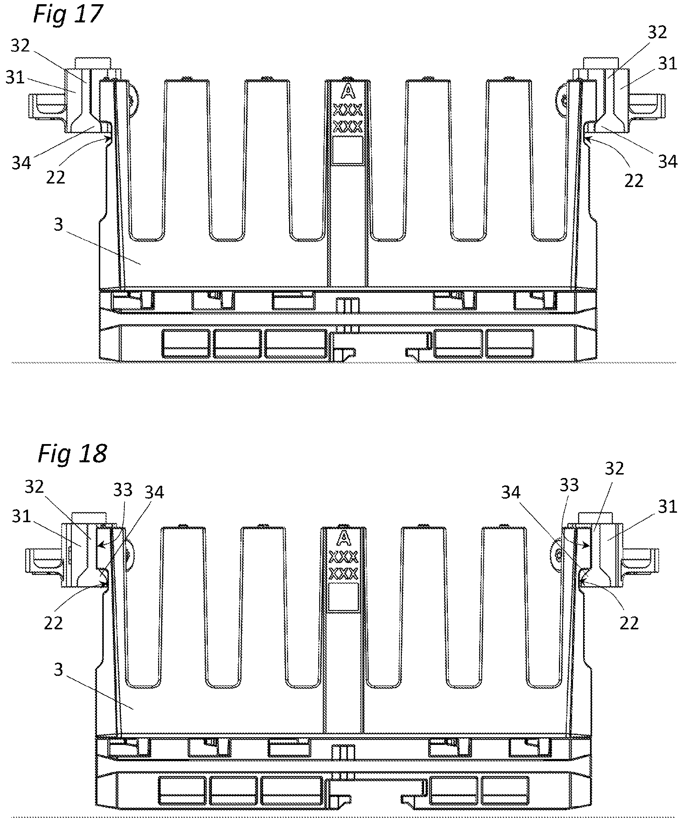

Les deux bras de préhension 31 sont montés pivotants entre au moins une position de préhension dans laquelle les bras de préhension 31 sont rapprochés l'un de l'autre (voir les figures 11 à 16 et 18) et sont configurés pour saisir et soulever un support de récipients 3 disposé dans l'un des emplacements de réception 8, et une position de libération (voir les figures 3 à 5 et 17) dans laquelle les bras de préhension 31 sont écartés l'un de l'autre et sont configurés pour libérer le support de récipients 3 et déposer le support de récipients 3 dans l'un des emplacements de réception 8. Ainsi, le chariot de convoyage autopropulsé 24 est plus particulièrement configuré pour déplacer un support de récipients 3, saisi et soulevé par les bras de préhension 31, le long du trajet de déplacement lorsque le chariot de convoyage autopropulsé 24 se déplace le long du chemin de convoyage.

Chacun des bras de préhension 31 comporte une partie de préhension 32 pourvue d'une surface d'appui 33 configurée pour exercer une force d'appui contre une face transversale 18 respective d'un support de récipients 3 lorsque les bras de préhension 31 sont dans la position de préhension. De façon avantageuse, chaque partie de préhension 32 est située à une extrémité libre du bras de préhension 31 respectif. Comme montré plus particulièrement sur la figure 3, les parties de préhension 32 des deux bras de préhension 31 font saillie d'une face latérale 26.1 du corps de chariot 26 lorsque les deux bras de préhension 31 occupent la position de préhension.

Chacun des bras de préhension 31 comporte également un organe de soulèvement 34, tel qu'une saillie de soulèvement, s'étendant à partir de la surface d'appui 33 d'une partie de préhension 32 respective. Chacun des organes de soulèvement 34 comporte avantageusement une rampe de soulèvement 35 qui est inclinée par rapport à la verticale.

Les organes de soulèvement 34 sont configurés pour être reçus respectivement dans les évidements de réception 22 prévus sur un support de récipients 3 lorsque les bras de préhension 31 occupent la position de préhension, et pour entraîner un soulèvement dudit support de récipients 3, par coopération des rampes de soulèvement 35 avec des surfaces complémentaires définies par les l'évidement de réception 22, lorsque les bras de préhension 31 sont déplacés dans la position de préhension.

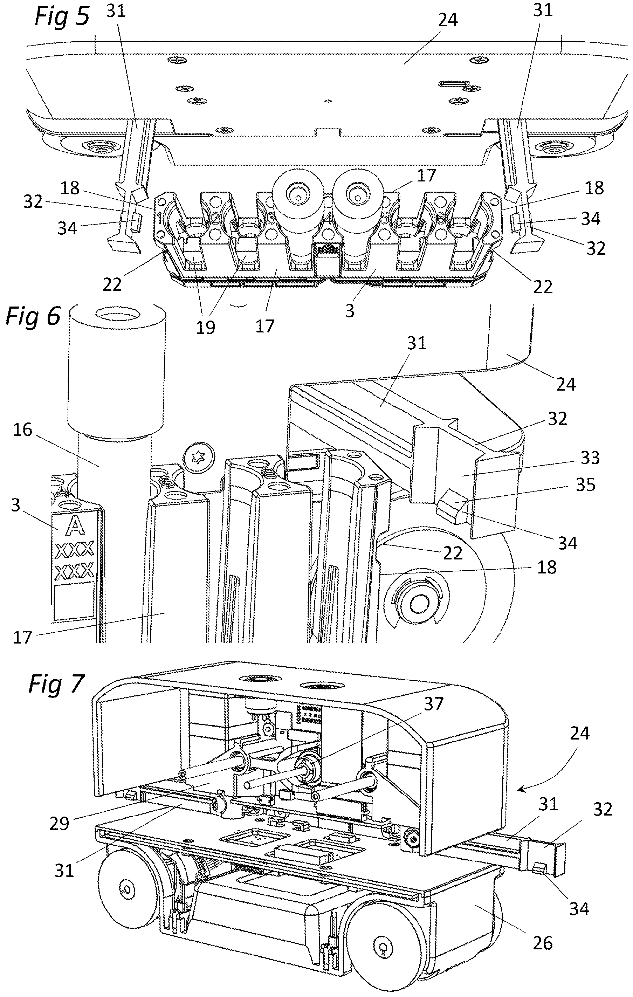

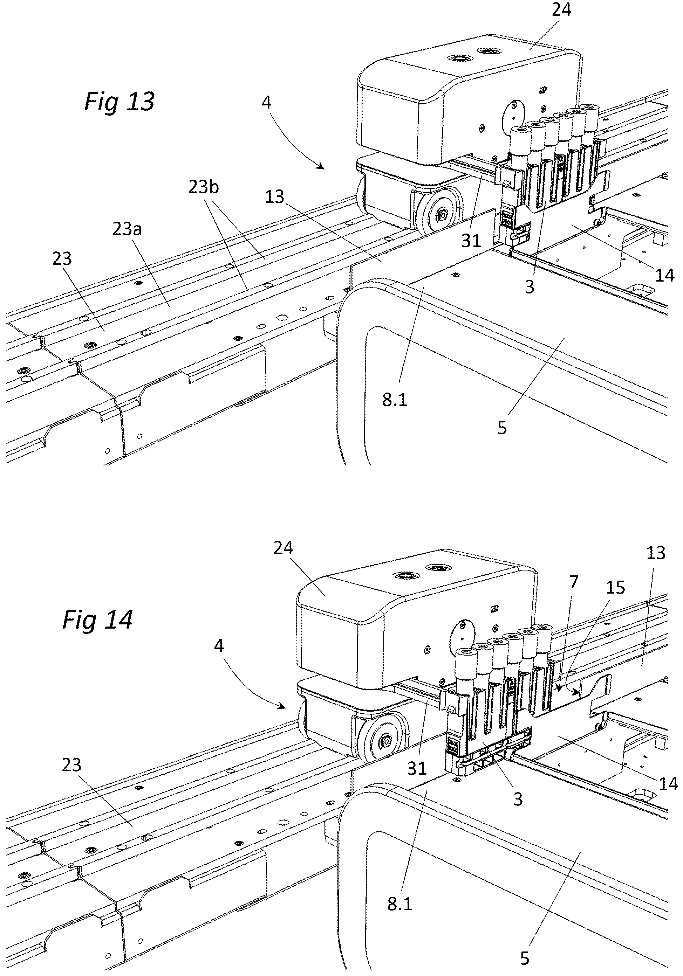

L'élément de support 29 est plus particulièrement configuré pour occuper une position de convoyage (voir les figures 7 à 9) dans laquelle, lorsque les bras de préhension 31 occupent la position de préhension, chacun des bras de préhension 31 fait saillie de la face latérale 26.1 du corps de chariot 26 d'une première distance, et une position de transfert (voir la figure 13) dans laquelle, lorsque les bras de préhension 31 occupent la position de préhension, chacun des bras de préhension 31 fait saillie de la face latérale 26.1 du corps de chariot 26 d'une deuxième distance qui est supérieure à la première distance.

Le chariot de convoyage autopropulsé 24 est plus particulièrement configuré pour déplacer un support de récipients 3, saisi et soulevé par les bras de préhension 31, le long du trajet de déplacement lorsque l'élément de support 29 occupe la position de convoyage, et pour saisir et soulever un support de récipients 3 disposé dans un emplacement de réception 8 ou pour libérer et déposer un support de récipients 3 dans un emplacement de réception 8 lorsque l'élément de support 29 occupe la position de transfert.

Comme montré sur les figures 12 et 13, l'élément de support 29 et les bras de préhension 31 du chariot de convoyage autopropulsé 24 sont configurés de telle sorte que, lorsque le chariot de convoyage autopropulsé 24 est disposé en regard d'une ouverture de passage 15 appartenant à une zone de réception 7 et que les bras de préhension 31 sont dans la position de préhension et accouplés à un support de récipients 3, un déplacement de l'élément de support 29 de la position de convoyage à la position de transfert entraîne un déplacement du support de récipients 3 hors du trajet de déplacement et à travers l'ouverture de passage 15. De plus, l'élément de support 29 et les bras de préhension 31 sont configurés de telle sorte que, lorsque le chariot de convoyage autopropulsé 24 est disposé en regard d'une ouverture de passage 15 et que les bras de préhension 31 sont dans la position de préhension et accouplés à un support de récipients 3, un déplacement de l'élément de support 29 de la position de transfert à la position de convoyage entraîne un déplacement du support de récipients 3 hors du chemin de guidage et dans le trajet de déplacement.

En outre, le chariot de convoyage autopropulsé 24 est configuré pour déplacer un support de récipients 3, saisi et soulevé par les bras de préhension 31 et disposé dans le chemin de guidage, le long du chemin de guidage lorsque le chariot de convoyage autopropulsé 24 se déplace le long du chemin de convoyage.

Le chariot de convoyage autopropulsé 24 comporte en outre un dispositif d'actionnement 36 configuré pour faire pivoter chacun des bras de préhension 31 autour de son axe de pivotement, et donc pour déplacer les deux bras de préhension 31 entre les positions de préhension et de libération. Le dispositif d'actionnement 36 peut comporter différents types d'actionneurs connus de l'homme du métier, et par exemple deux moteurs 36.1 qui sont chacun couplés en rotation à un bras de préhension 31 respectif.

Le chariot de convoyage autopropulsé 24 comporte également un mécanisme d'entraînement en translation 37 configuré pour déplacer en translation l'élément de support 29 par rapport au corps de chariot 26 et entre la position de convoyage et la position de transfert. Le mécanisme d'entraînement en translation 37 peut comporter différents types d'actionneurs connus de l'homme du métier, et peut par exemple comporter un moteur linéaire, tel qu'un moteur à vis sans fin, comprenant une première portion reliée à l'élément de support 29 et une deuxième portion reliée au corps de chariot 26. Selon une variante de réalisation, le mécanisme d'entraînement en translation pourrait comporter une crémaillère prévue sur l'élément de support 29, une roue dentée prévue sur le corps de chariot 26 et configurée pour coopérer avec la crémaillère, et un moteur d'entraînement prévu sur le corps de chariot 26 et solidaire en rotation de la roue dentée.

Le chariot de convoyage autopropulsé 24 comporte également une batterie 38 configurée pour alimenter électriquement le chariot de convoyage autopropulsé 24, et plus particulièrement le mécanisme d'entraînement en translation 37, le mécanisme d'entraînement en rotation 28 et le dispositif d'actionnement 36. La batterie 38 est également configurée pour alimenter électriquement une unité électronique de commande 40 qui équipe le chariot de convoyage autopropulsé 24 et qui est configurée pour commander le fonctionnement du chariot de convoyage autopropulsé 24. Une telle unité électronique de commande 40 comporte plus particulièrement une carte électronique pourvue d'un microprocesseur.

Selon le mode de réalisation représenté sur les figures, la batterie 38 est rechargeable, et peut être rechargée par exemple par contact ou par induction. A cet effet, le système de convoyage 2 comporte au moins une zone de rechargement 39 comportant un dispositif de rechargement électrique configuré pour recharger électriquement la batterie 38 lorsque le chariot de convoyage autopropulsé 24 est situé dans la zone de rechargement. De façon avantageuse, le système de convoyage 2 comporte deux zones de rechargement 39 situées chacune à une extrémité du chemin de convoyage, et une bobine de charge est prévue à proximité de chacune des extrémités longitudinales du chariot de convoyage autopropulsé 24.

Selon un mode de réalisation de l'invention, le système de convoyage 2 comporte une pluralité de repères de positionnement (non visibles sur les figures) disposés sur le chemin de convoyage. Le système de convoyage 2 comporte par exemple un repère de positionnement en regard de chaque emplacement de réception 8 et de chaque ouverture de passage 15.

Selon un tel mode de réalisation de l'invention, le chariot de convoyage autopropulsé 24 comporte d'une part des moyens de détection, tels qu'un lecteur optique, un détecteur RFID ou un détecteur inductif, configurés pour détecter les repères de positionnement disposés sur le chemin de convoyage lors des déplacements du chariot de convoyage autopropulsé 24 le long du chemin de convoyage, et d'autre part des moyens de commande, tels qu'un circuit intégré ou un microprocesseur, configurés pour commander l'immobilisation du chariot de convoyage autopropulsé 24 lorsque les moyens de détection détectent le repère de positionnement associé à l'emplacement de réception 8 ou à l'ouverture de passage 15 que le chariot de convoyage autopropulsé 24 doit atteindre. Chaque repère de positionnement peut être formé par exemple par une barrière optique, un code-barres, un code QR, une étiquette RFID ou encore une découpe dans l'un des rails de guidage 23b.

Selon un mode de réalisation de l'invention, le chariot de convoyage autopropulsé 24 comporte en outre des moyens de détermination configurés pour déterminer la position du chariot de convoyage autopropulsé 24 le long du chemin de convoyage en fonction de la distance parcourue par le chariot de convoyage autopropulsé 24. A cet effet, les roues motrices 27 pourraient être configurées pour entraîner un codeur permettant de mesurer la distance parcourue par le chariot de convoyage autopropulsé 24 et d'asservir le mouvement commandé au chariot de convoyage autopropulsé 24 par l'unité électronique de commande 40 en fonction notamment de cette distance parcourue.

Comme montré sur la figure 1, le système de convoyage 2 comporte une unité de commande 41 configurée pour communiquer à distance, par exemple par wifi ou Bluetooth, avec le chariot de convoyage autopropulsé 24. L'unité de commande 41 peut être un ordinateur, par exemple de type PC. Avantageusement, l'unité de commande 41 est également configurée pour communiquer avec les différents dispositifs d'analyse et/ou de mesure 5.

De façon avantageuse, les moyens de commande appartenant au chariot de convoyage autopropulsé 24 sont configurés pour recevoir des signaux de commande provenant de l'unité de commande 41, et pour transmettre des signaux d'entraînement notamment au mécanisme d'entraînement en translation 37, au mécanisme d'entraînement en rotation 28 et au dispositif d'actionnement 36, en réponse aux signaux de commande reçus.

Le système de convoyage 2 comprend en outre un dispositif de stockage additionnel 42, également nommé dispositif de déchargement, disposé le long de l'unité de convoyage 4 et configuré pour stocker des supports de récipients 3 déchargés de l'unité de convoyage 4.

Un exemple de procédé de traitement d'échantillons pouvant être réalisé à l'aide du système d'analyse biologique 1 décrit précédemment va maintenant être décrit. Un tel procédé de traitement d'échantillons comprend notamment les étapes suivantes consistant à :
a) charger manuellement des récipients 16 dans des supports de récipients 3 et charger manuellement les supports de récipients 3 dans le dispositif de stockage 6 ;
b) lire optiquement, à l'aide d'un dispositif de lecture de code d'identification prévu dans le dispositif de stockage 6, des codes d'identification portés par les différents récipients 3 supportés par les supports de récipient 4 chargé dans le dispositif de stockage 6 ;
c) optionnellement, entraîner en rotation un ou plusieurs des récipients 16 portés par les supports de récipients 4 de manière à assurer la lecture optique de leurs codes d'identification par le dispositif de lecture de code d'identification ;
d) charger automatiquement un support de récipients 3 dans le deuxième emplacement de réception 8.2 de la zone de réception 7 située à proximité du dispositif de stockage 6 ;
e) déterminer les destinations du support de récipients 3 chargé dans le deuxième emplacement de réception 8.2 de la zone de réception 7 située à proximité du dispositif de stockage 6 en fonction des codes d'identification portés par les différents récipients 16 supportés par ledit support de récipients 3 et selon les analyses prescrites et communiquées par l'unité de commande 41 ou un ordinateur central du laboratoire ;
f) commander un déplacement du chariot de convoyage autopropulsé 24 en regard de deuxième emplacement de réception 8.2 de la zone de réception 7 située à proximité du dispositif de stockage 6 ;
g) commander un déplacement de l'élément de support 29 du chariot de convoyage autopropulsé 24 dans la position de transfert et un pivotement des bras de préhension 31 du chariot de convoyage autopropulsé 24 dans la position de préhension de manière à saisir et soulever le support de récipients 3 ;
h) commander un déplacement de l'élément de support 29 dans la position de convoyage ;
i) commander un déplacement du chariot de convoyage autopropulsé 24 en regard de l'ouverture de passage 15 prévue sur la zone de réception 7 associée au dispositif d'analyse et/ou de mesure 5 dans lequel ledit support de récipients 3 doit être chargé ;
j) commander une translation de l'élément de support 29 du chariot de convoyage autopropulsé 24 dans la position de transfert de manière à déplacer le support de récipients 3 à travers l'ouverture de passage 15 et dans le chemin de guidage défini par la zone de réception 7 ;
k) commander un déplacement du chariot de convoyage autopropulsé 24 le long du chemin de convoyage de manière à positionner le support de récipients 3 dans le premier emplacement de réception 8.1 prévue dans ladite zone de réception 7 ;
l) commander un pivotement des bras de préhension 31 du chariot de convoyage autopropulsé 24 dans la position de libération de manière à libérer le support de récipients 3 ;
m) charger le support de récipients 3 dans le dispositif d'analyse et/ou de mesure 5 associé à la zone de réception 7, prélever un échantillon dans un ou plusieurs récipients 16 supportés par ledit support de récipients 3, à l'aide d'un dispositif de prélèvement appartenant au dispositif d'analyse et/ou de mesure 5, et traiter le ou les échantillon(s) prélevé(s) à l'aide du dispositif d'analyse et/ou de mesure 5 ; pendant ces étapes de prélèvement et de traitement, le chariot de convoyage autopropulsé 24 peut être commandé pour déplacer un ou plusieurs autres supports de récipients 3 en temps masqué ;
n) déplacer le support de récipients 3, préalablement chargé dans le dispositif d'analyse et/ou de mesure 5 précité, dans le deuxième emplacement de réception 8.2 de la zone de réception 7 associée à ce dispositif d'analyse et/ou de mesure 5, et commander un déplacement du chariot de convoyage autopropulsé 24 en regard dudit deuxième emplacement de réception 8.2 ;
o) commander une translation de l'élément de support 29 du chariot de convoyage autopropulsé 24 dans la position de transfert, et commander un pivotement des bras de préhension 31 dans la position de préhension de manière à saisir et soulevé le support de récipients 3 disposé dans le deuxième emplacement de réception 8.2 ;
p) commander une translation de l'élément de support 29 du chariot de convoyage autopropulsé 24 dans la position de convoyage de manière à évacuer le support de récipients 3 hors du chemin de guidage ;
q) commander un déplacement du chariot de convoyage autopropulsé 24 en regard d'un emplacement de réception 8 situé à proximité du dispositif de stockage additionnel 42, et commander une translation de l'élément de support 29 du chariot de convoyage autopropulsé 24 dans la position de transfert de manière à décharger le support de récipients 3 dans l'emplacement de réception 8 précité ; et
r) commander un pivotement des bras de préhension 31 du chariot de convoyage autopropulsé 24 dans la position de libération de manière à libérer le support de récipients 3.

Le système d'analyse biologique 1 selon la présente invention est destiné à fluidifier les flux de traitement des échantillons dans un laboratoire d'analyse, afin d'en augmenter la productivité et la qualité (réduction de la main d'œuvre et des erreurs). Ainsi, il va de soi que le système de convoyage 2 selon l'invention est configuré pour communiquer avec l'unité de commande 41, qui gère les charges de travail des différents dispositifs d'analyse et/ou de mesure 5 (telles que les tests à effectuer par échantillon), et les transmet au système de convoyage 2 et aux dispositifs d'analyse et/ou de mesure 5 de telle sorte que les différents récipients 16 soient acheminés vers les dispositifs d'analyse et/ou de mesure 5 selon les demandes de tests et les capacités de chaque dispositif d'analyse et/ou de mesure 5. L'unité de commande 41, qui gère les chariots de convoyage et de chargement, dispose donc d'une « intelligence », une sorte d'ERP (progiciel de gestion intégré) pour optimiser les convoyages des supports de récipients 3 en fonction des charges de travail des différents dispositifs d'analyse et/ou de mesure 5.

De plus, chaque dispositif d'analyse et/ou de mesure 5 peut comprendre une interface de communication et de visualisation, et une électronique embarquée (non représentée sur les figures). Chaque interface de communication et de visualisation comporte par exemple un écran tactile relié à un ordinateur de type PC. L'ordinateur de type PC est plus particulièrement agencé pour enregistrer des demandes d'analyses chargées manuellement par un opérateur à l'aide de l'écran tactile ou provenant de l'unité de commande 41 ou d'un ordinateur central du laboratoire, pour envoyer des requêtes d'analyse à l'électronique embarquée, pour récupérer des données mesurées, les traiter grâce à des algorithmes spécifiques, et mettre les résultats à disposition de l'opérateur ou les transmettre à l'unité de commande 41.

Selon une variante de réalisation de l'invention, le système d'analyse biologique 1 pourrait comporter des dispositifs d'analyse et/ou de mesure 5 disposés de part et d'autre de l'unité de convoyage 4, et les deux bras de préhension 31 du chariot de convoyage autopropulsé 24 pourraient être configurés pour occuper une première position de préhension dans laquelle les deux bras de préhension 31 font saillie d'une première face latérale 26.1 du corps de chariot 26 et sont configurés pour saisir et soulever un support de récipients 3 disposé d'un premier côté du chemin de convoyage, et une deuxième position de préhension dans laquelle les deux bras de préhension 31 font saillie d'une deuxième face latérale 26.2 du corps de chariot 26 et sont configurés pour saisir et soulever un support de récipients 3 disposé d'un deuxième côté du chemin de convoyage.

Le système d'analyse biologique 1 selon la présente invention comprend ainsi des parties pré-analytiques, analytiques et post-analytiques. Les parties pré-analytiques comportent par exemple notamment un poste de chargement de supports de récipient, un poste d'identification de codes d'identification, et une unité de convoyage pour convoyer des supports de récipients en particulier vers une ou plusieurs machines d'analyse et/ou de mesure. Les parties pré-analytiques peuvent également comporter un ou plusieurs postes parmi un poste de centrifugation, un poste d'aliquotage et un poste de débouchage de tube.

Les parties analytiques peuvent par exemple comporter un ou plusieurs postes parmi un poste de biochimie (par exemple de photométrie), un poste d'immunochimie (par exemple d'immunofluorescence), un poste de coagulation, un poste d'hématologie et un poste de cytométrie.

Les parties post-analytiques peuvent par exemple comporter un poste de stockage à courte durée et/ou un poste de stockage réfrigéré de longue durée.

## Revendications

1. Système de traitement d'échantillons biologiques comprenant :
- un système de convoyage (2) comprenant :
∘ une pluralité de supports de récipients (3) destinés à supporter des récipients (16) contenant des échantillons biologiques, chaque support de récipients (3) comportant deux évidements de réception (22) prévus respectivement sur deux faces transversales (18) dudit support de récipients (3) qui sont opposées l'une à l'autre,
∘ une unité de convoyage (4) configurée pour convoyer les supports de récipients (3), l'unité de convoyage (4) comportant un élément de guidage de chariot (23) définissant un chemin de convoyage, et un chariot de convoyage autopropulsé (24) déplaçable le long du chemin de convoyage, l'élément de guidage de chariot (23) étant configuré pour guider le chariot de convoyage autopropulsé (24) lors des déplacements du chariot de convoyage autopropulsé (24) le long du chemin de convoyage, le chariot de convoyage autopropulsé (24) comportant un corps de chariot (26) et étant configuré pour déplacer un support de récipients (3) le long d'un trajet de déplacement lorsque le chariot de convoyage autopropulsé (24) se déplace le long du chemin de convoyage, et
∘ une pluralité d'emplacements de réception (8) disposés le long du trajet de déplacement et décalés latéralement par rapport au trajet de déplacement, chacun des emplacements de réception (8) étant configuré pour recevoir et stocker au moins temporairement un support de récipients (3), le chariot de convoyage autopropulsé (24) étant en outre configuré pour déplacer un support de récipients (3) transversalement au trajet de déplacement de manière à déplacer ledit support de récipients (3) dans ou hors d'un emplacement de réception (8),
- au moins un dispositif d'analyse et/ou de mesure (5) disposé le long de l'unité de convoyage (4) et configuré pour réaliser des tests sanguins,
**caractérisé en ce que** le chariot de convoyage autopropulsé (24) comporte deux bras de préhension (31) espacés l'un de l'autre et montés mobiles entre au moins une position de préhension dans laquelle les bras de préhension (31) sont rapprochés l'un de l'autre et sont configurés pour saisir et soulever un support de récipients (3) disposé dans l'un des emplacements de réception (8), et une position de libération dans laquelle les bras de préhension (31) sont écartés l'un de l'autre et sont configurés pour libérer le support de récipients (3) et déposer le support de récipients (3) dans l'un des emplacements de réception (8), le chariot de convoyage autopropulsé (24) étant configuré pour déplacer un support de récipients (3), saisi et soulevé par les bras de préhension (31), le long du trajet de déplacement lorsque le chariot de convoyage autopropulsé (24) se déplace le long du chemin de convoyage, et **en ce que** chacun des bras de préhension (31) comporte un organe de soulèvement (34), les organes de soulèvement (34) étant configurés pour être reçus respectivement dans les deux évidements de réception (22) prévus sur les deux faces transversales (18) d'un support de récipients (3) et pour soulever ledit support de récipients (3) lorsque les bras de préhension (31) sont déplacés dans la position de préhension.

2. Système de traitement d'échantillons biologiques selon la revendication 1, dans lequel les deux bras de préhension (31) font saillie d'une face latérale (26.1) du corps de chariot (26) lorsque les deux bras de préhension (31) occupent la position de préhension.

3. Système de traitement d'échantillons biologiques selon la revendication 1 ou 2, dans lequel chacun des bras de préhension (31) est monté pivotant autour d'un axe de pivotement respectif qui est sensiblement vertical.

4. Système de traitement d'échantillons biologiques selon l'une quelconque des revendications 1 à 3, dans lequel les bras de préhension (31) sont déplaçables dans un plan de déplacement qui est sensiblement horizontal.

5. Système de traitement d'échantillons biologiques selon l'une quelconque des revendications 1 à 4, dans lequel chacun des bras de préhension (31) comporte une partie de préhension (32) configurée pour exercer une force d'appui contre une face transversale (18) respective d'un support de récipients (3) lorsque les bras de préhension (31) sont dans la position de préhension.

6. Système de traitement d'échantillons biologiques selon la revendication 5, dans lequel chaque partie de préhension (32) comporte une surface d'appui (33) configurée pour exercer une force d'appui contre une face transversale (18) respective d'un support de récipients (3) lorsque les bras de préhension (31) sont dans la position de préhension, chaque organe de soulèvement (34) s'étendant à partir de la surface d'appui (33) d'une partie de préhension (32) respective.

7. Système de traitement d'échantillons biologiques selon l'une quelconque des revendications 1 à 6, dans lequel chacun des organes de soulèvement (34) comporte une rampe de soulèvement (35) qui est inclinée par rapport à la verticale, les deux rampes de soulèvement (35) étant configurées pour soulever un support de récipients (3) lorsque les bras de préhension (31) sont déplacés dans la position de préhension.

8. Système de traitement d'échantillons biologiques selon l'une quelconque des revendications 1 à 7, dans lequel le système de convoyage (2) comprend au moins une zone de réception (7) disposée le long du trajet de déplacement et comportant un premier emplacement de réception (8.1) et un deuxième emplacement de réception (8.2) qui sont décalés l'un par rapport à l'autre le long du trajet de déplacement et qui sont chacun configurés pour recevoir et stocker au moins temporairement un support de récipients (3).

9. Système de traitement d'échantillons biologiques selon la revendication 8, dans lequel l'au moins une zone de réception (7) comporte une première paroi de guidage (13) et une deuxième paroi de guidage (14) décalées l'une par rapport à l'autre selon une direction qui s'étend transversalement au trajet de déplacement, les première et deuxième parois de guidage (13, 14) définissant un chemin de guidage s'étendant le long du trajet de déplacement et les premier et deuxième emplacements de réception (8.1, 8.2) étant disposés respectivement à des extrémités opposées du chemin de guidage, la première paroi de guidage (13), qui sépare le trajet de déplacement et le chemin de guidage, comportant une ouverture de passage (15) qui est située en regard de la deuxième paroi de guidage (14) et qui est destinée au passage d'un support de récipients (3), le chariot de convoyage autopropulsé (24) étant configuré pour déplacer un support de récipients (3), saisi et soulevé par les bras de préhension (31), à travers l'ouverture de passage (15) et le long du chemin de guidage.

10. Système de traitement d'échantillons biologiques selon l'une quelconque des revendications 1 à 9, dans lequel le chariot de convoyage autopropulsé (24) comporte un élément de support (29) sur lequel sont montés mobiles les bras de préhension (31), l'élément de support (29) étant monté mobile en translation par rapport au corps de chariot (26) selon une direction de déplacement qui est transversale au chemin de convoyage et entre au moins une position de convoyage dans laquelle le chariot de convoyage autopropulsé (24) est configuré pour déplacer un support de récipients (3), saisi et soulevé par les bras de préhension (31), le long du trajet de déplacement et une position de transfert dans laquelle le chariot de convoyage autopropulsé (24) est configuré pour saisir et soulever un support de récipients (3) disposé dans un emplacement de réception (8) ou pour libérer et déposer un support de récipients (3) dans un emplacement de réception (8).

11. Système de traitement d'échantillons biologiques selon la revendication 10 en combinaison avec la revendication 2, dans lequel lorsque l'élément de support (29) occupe la position de convoyage et les bras de préhension (31) occupent la position de préhension, chacun des bras de préhension (31) fait saillie de la face latérale (26.1) du corps de chariot (26) d'une première distance, et, lorsque l'élément de support (29) occupe la position de transfert et les bras de préhension (31) occupent la position de préhension, chacun des bras de préhension (31) fait saillie de la face latérale (26.1) du corps de chariot (26) d'une deuxième distance qui est supérieure à la première distance.

12. Système de traitement d'échantillons biologiques selon l'une quelconque des revendications 1 à 11, dans lequel les deux bras de préhension (31) du chariot de convoyage autopropulsé (24) sont configurés pour occuper une première position de préhension dans laquelle les deux bras de préhension (31) font saillie d'une première face latérale du corps de chariot (26) et sont configurés pour saisir et soulever un support de récipients (3) disposé d'un premier côté du chemin de convoyage, et une deuxième position de préhension dans laquelle les deux bras de préhension (31) font saillie d'une deuxième face latérale du corps de chariot (26) et sont configurés pour saisir et soulever un support de récipients (3) disposé d'un deuxième côté du chemin de convoyage.

13. Système de traitement d'échantillons biologiques selon l'une quelconque des revendications 1 à 12, dans lequel le chariot de convoyage autopropulsé (24) comprend au moins une roue motrice (27) configurée pour rouler sur l'élément de guidage de chariot (23), et au moins un mécanisme d'entraînement en rotation (28) configuré pour entraîner en rotation l'au moins une roue motrice (27).

## Patentansprüche

1. **System** zur Behandlung biologischer Proben, umfassend:
- ein Fördersystem (2), umfassend:
∘ eine Vielzahl von Behälterhaltern (3), die dazu bestimmt sind, Behälter (16) zu halten, die biologische Proben enthalten, wobei jeder Behälterhalter (3) zwei Aufnahmeaussparungen (22) aufweist, die jeweils an zwei einander gegenüberliegenden Querflächen (18) des Behälterhalters (3) vorgesehen sind,
∘ eine Fördereinheit (4), die so eingerichtet ist, dass sie die Behälterhalter (3) befördert, wobei die Fördereinheit (4) ein Wagenführungselement (23), das einen Förderweg definiert, und einen selbstfahrenden Förderwagen (24) aufweist, der entlang des Förderwegs bewegt werden kann, wobei das Wagenführungselement (23) so eingerichtet ist, dass es den selbstfahrenden Förderwagen (24) während der Bewegungen des selbstfahrenden Förderwagens (24) entlang des Förderwegs führt, wobei der selbstfahrende Förderwagen (24) einen Wagenkörper (26) aufweist und so eingerichtet ist, dass er einen Behälterhalter (3) entlang einer Bewegungsbahn bewegt, wenn sich der selbstfahrende Förderwagen (24) entlang des Förderwegs bewegt, und
∘ eine Vielzahl von Aufnahmeplätzen (8), die entlang der Bewegungsbahn angeordnet und in Bezug auf die Bewegungsbahn seitlich versetzt sind, wobei jeder der Aufnahmeplätze (8) so eingerichtet ist, dass er mindestens vorübergehend einen Behälterhalter (3) aufnimmt und lagert, wobei der selbstfahrende Förderwagen (24) ferner so eingerichtet ist, dass er einen Behälterhalter (3) quer zur Bewegungsbahn bewegt, um den Behälterhalter (3) in den Aufnahmeplatz (8) oder aus diesem heraus zu bewegen,
- mindestens eine Analyse- und/oder Messvorrichtung (5), die entlang der Fördereinheit (4) angeordnet und so eingerichtet ist, dass sie Bluttests durchführt,
**dadurch gekennzeichnet, dass** der selbstfahrende Förderwagen (24) zwei Greifarme (31) aufweist, die voneinander beabstandet sind und beweglich zwischen mindestens einer Greifposition, in der die Greifarme (31) einander angenähert werden und so eingerichtet sind, dass sie einen in einem der Aufnahmeplätze (8) angeordneten Behälterhalter (3) erfassen und anheben, und einer Freigabeposition, in der die Greifarme (31) voneinander entfernt sind und so eingerichtet sind, dass sie den Behälterhalter (3) freigeben und den Behälterhalter (3) in einen der Aufnahmeplätze (8) einsetzen, montiert sind, wobei der selbstfahrende Förderwagen (24) so eingerichtet ist, dass er einen von den Greifarmen (31) erfassten und angehobenen Behälterhalter (3) entlang der Bewegungsbahn bewegt, wenn sich der selbstfahrende Förderwagen (24) entlang des Förderwegs bewegt, und dass jeder der Greifarme (31) ein Hebeorgan (34) umfasst, wobei die Hebeorgane (34) so eingerichtet sind, dass sie in den beiden Aufnahmeaussparungen (22) aufgenommen werden, die an den beiden Querflächen (18) eines Behälterhalters (3) vorgesehen sind, und den Behälterhalter (3) anheben, wenn die Greifarme (31) in die Greifposition bewegt werden.

2. System zur Behandlung biologischer Proben nach Anspruch 1, wobei die beiden Greifarme (31) von einer Seitenfläche (26.1) des Wagenkörpers (26) vorstehen, wenn die beiden Greifarme (31) die Greifposition einnehmen.

3. System zur Behandlung biologischer Proben nach Anspruch 1 oder 2, wobei jeder der Greifarme (31) um eine jeweilige Schwenkachse schwenkbar montiert ist, die im Wesentlichen vertikal ist.

4. System zur Behandlung biologischer Proben nach einem der Ansprüche 1 bis 3, wobei die Greifarme (31) in einer im Wesentlichen horizontalen Bewegungsebene bewegt werden können.

5. System zur Behandlung biologischer Proben nach einem der Ansprüche 1 bis 4, wobei jeder der Greifarme (31) einen Greifteil (32) aufweist, der so eingerichtet ist, dass er eine Auflagekraft gegen eine jeweilige Querfläche (18) eines Behälterhalters (3) ausübt, wenn sich die Greifarme (31) in der Greifposition befinden.

6. System zur Behandlung biologischer Proben nach Anspruch 5, wobei jeder Greifteil (32) eine Auflagefläche (33) aufweist, die so eingerichtet ist, dass sie eine Auflagekraft auf eine jeweilige Querfläche (18) eines Behälterhalters (3) ausübt, wenn sich die Greifarme (31) in der Greifposition befinden, wobei sich jedes Hebeorgan (34) von der Auflagefläche (33) eines jeweiligen Greifteils (32) aus erstreckt.

7. System zur Behandlung biologischer Proben nach einem der Ansprüche 1 bis 6, wobei jedes der Hebeorgane (34) eine Heberampe (35) aufweist, die gegenüber der Vertikalen geneigt ist, wobei die beiden Heberampen (35) so eingerichtet sind, dass sie einen Behälterhalter (3) anheben, wenn die Greifarme (31) in die Greifposition bewegt werden.

8. System zur Behandlung biologischer Proben nach einem der Ansprüche 1 bis 7, wobei das Fördersystem (2) mindestens einen entlang der Bewegungsbahn angeordneten Aufnahmebereich (7) umfasst und einen ersten Aufnahmeplatz (8.1) und einen zweiten Aufnahmeplatz (8.2) aufweist, die entlang der Bewegungsbahn in Bezug zueinander versetzt sind und die jeweils so eingerichtet sind, dass sie mindestens vorübergehend einen Behälterhalter (3) aufnehmen und lagern.

9. System zur Behandlung biologischer Proben nach Anspruch 8, wobei der mindestens eine Aufnahmebereich (7) eine erste Führungswand (13) und eine zweite Führungswand (14) aufweist, die in einer Richtung, die sich quer zur Bewegungsbahn erstreckt, in Bezug zueinander versetzt sind, wobei die erste und die zweite Führungswand (13, 14) einen Führungsweg definieren, der sich entlang der Bewegungsbahn erstreckt, und der erste und der zweite Aufnahmeplatz (8.1, 8.2) jeweils an gegenüberliegenden Enden des Führungswegs angeordnet sind, wobei die erste Führungswand (13), die die Bewegungsbahn und den Führungsweg trennt, eine Durchgangsöffnung (15) aufweist, die sich gegenüber der zweiten Führungswand (14) befindet und für den Durchlass eines Behälterhalters (3) bestimmt ist, wobei der selbstfahrende Förderwagen (24) so eingerichtet ist, dass er einen von den Greifarmen (31) erfassten und angehobenen Behälterhalter (3) durch die Durchgangsöffnung (15) und entlang des Führungswegs bewegt.

10. System zur Behandlung biologischer Proben nach einem der Ansprüche 1 bis 9, wobei der selbstfahrende Förderwagen (24) ein Trägerelement (29) aufweist, an dem die Greifarme (31) beweglich montiert sind, wobei das Trägerelement (29) in Bezug zu dem Wagenkörper (26) in einer Bewegungsrichtung, die quer zu dem Förderweg verläuft, und zwischen mindestens einer Förderposition, in der der selbstfahrende Förderwagen (24) so eingerichtet ist, dass er einen von den Greifarmen (31) erfassten und angehobenen Behältehalter (3) entlang der Bewegungsbahn bewegt, und einer Übergabeposition, in der der selbstfahrende Förderwagen (24) so eingerichtet ist, dass er einen in dem Aufnahmeplatz (8) angeordneten Behälterhalter (3) erfasst und anhebt oder einen Behälterhalter (3) in einem Aufnahmeplatz (8) freigibt und einsetzt, translationsbeweglich montiert ist.

11. System zur Behandlung biologischer Proben nach Anspruch 10 in Kombination mit Anspruch 2, wobei, wenn das Trägerelement (29) die Förderposition einnimmt und die Greifarme (31) die Greifposition einnehmen, jeder der Greifarme (31) um einen ersten Abstand von der Seitenfläche (26.1) des Wagenkörpers (26) vorsteht, und wenn das Trägerelement (29) die Übergabeposition einnimmt und die Greifarme (31) die Greifposition einnehmen, jeder der Greifarme (31) um einen zweiten Abstand, der größer als der erste Abstand ist, von der Seitenfläche (26.1) des Wagenkörpers (26) vorsteht.

12. System zur Behandlung biologischer Proben nach einem der Ansprüche 1 bis 11, wobei die beiden Greifarme (31) des selbstfahrenden Förderwagens (24) so eingerichtet sind, dass sie eine erste Greifposition einnehmen, in der die beiden Greifarme (31) von einer ersten Seitenfläche des Wagenkörpers (26) vorstehen und so eingerichtet sind, dass sie einen an einer ersten Seite des Förderwegs angeordneten Behälterhalter (3) erfassen und anheben, und eine zweite Greifposition, in der die beiden Greifarme (31) von einer zweiten Seitenfläche des Wagenkörpers (26) vorstehen und so eingerichet sind, dass sie einen an einer zweiten Seite des Förderwegs angeordneten Behälerhalter (3) erfassen und anheben.

13. System zur Behandlung biologischer Proben nach einem der Ansprüche 1 bis 12, wobei der selbstfahrende Förderwagen (24) mindestens ein Antriebsrad (27), das so eingerichtet ist, dass es auf dem Wagenführungselement (23) rollt, und mindestens einen Drehantriebsmechanismus (28) umfasst, der so eingerichtet ist, dass er das mindestens eine Antriebsrad (27) in Drehung antreibt.

## Claims

1. A biological sample treatment system comprising:
- a conveyor system (2) comprising:
∘ a plurality of container holders (3) intended to hold containers (16) containing biological samples, each container holder (3) comprising two receiving recesses (22) provided on two transverse faces (18) of said container holder (3) which are opposite to each other,
∘ a conveyor unit (4) configured to convey the container holders (3), the conveyor unit (4) including a carriage guide element (23) defining a conveyor track, and a self-propelled conveyor carriage (24) movable along the conveyor track, the carriage guide element (23) being configured to guide the self-propelled conveyor carriage (24) during displacements of the self-propelled conveyor carriage (24) along the conveyor track, the self-propelled conveyor carriage (24) including a carriage body (26) and being configured to move a container holder (3) along a travel path when the self-propelled conveyor carriage (24) moves along the conveyor track, and
∘ a plurality of receiving locations (8) arranged along the travel path and laterally offset with respect to the travel path, each of the receiving locations (8) being configured to receive and at least temporarily store a container holder (3), the self-propelled conveyor carriage (24) being further configured to move a container holder (3) transversely to the travel path so as to move said container holder (3) into or out of a receiving location (8),
- at least one analysis and/or measurement device (5) arranged along the conveyor unit (4) and configured to carry out blood tests,
**characterized in that** the self-propelled conveyor carriage (24) includes two gripping arms (31) spaced apart from each other and mounted movable between at least a gripping position in which the gripping arms (31) are brought closer to each other and are configured to grip and lift a container holder (3) arranged in one of the receiving locations (8), and a release position in which the gripping arms (31) are moved away from each other and are configured to release the container holder (3) and deposit the container holder (3) in one of the receiving locations (8), the self-propelled conveyor carriage (24) being configured to move a container holder (3), gripped and lifted by the gripping arms (31), along the travel path when the self-propelled conveyor carriage (24) moves along the conveyor track, and **in that** each of the gripping arms (31) includes a lifting member (34), the lifting members (34) being configured to be received respectively in the two receiving recesses (22) provided on the two transverse faces (18) of a container holder (3) and to lift said container holder (3) when the gripping arms (31) are moved to the gripping position.

2. The biological sample treatment system according to claim 1, wherein the two gripping arms (31) project from a lateral face (26.1) of the carriage body (26) when the two gripping arms (31) occupy the gripping position.

3. The biological sample treatment system of claim 1 or 2, wherein each of the gripping arms (31) is pivotally mounted about a respective pivot axis which is substantially vertical.

4. The biological sample treatment system according to any one of claims 1 to 3, wherein the gripping arms (31) are movable in a travel plane which is substantially horizontal.

5. The biological sample treatment system according to any one of claims 1 to 4, wherein each of the gripping arms (31) includes a gripping portion (32) configured to exert a bearing force against a respective transverse face (18) of a container holder (3) when the gripping arms (31) are in the gripping position.

6. The biological sample treatment system according to claim 5, wherein each gripping portion (32) includes a bearing surface (33) configured to exert a bearing force against a respective transverse face (18) of a container holder (3) when the gripping arms (31) are in the gripping position, each lifting member (34) extending from the bearing surface (33) of a respective gripping portion (32).

7. The biological sample treatment system according to any one of claims 1 to 6, wherein each of the lifting members (34) includes a lifting ramp (35) which is inclined with respect to the vertical, the two lifting ramps (35) being configured to lift a container holder (3) when the gripping arms (31) are displaced into the gripping position.

8. The biological sample treatment system according to any one of claims 1 to 7, wherein the conveyor system (2) comprises at least one receiving area (7) arranged along the travel path and including a first receiving location (8.1) and a second receiving location (8.2) which are offset from each other along the travel path and each of which is configured to receive and at least temporarily store a container holder (3).

9. The biological sample treatment system according to claim 8, wherein the at least one receiving area (7) includes a first guide wall (13) and a second guide wall (14) offset from each other according to a direction which extends transversely to the travel path, the first and second guide walls (13, 14) defining a guide track extending along the travel path and the first and second receiving locations (8.1, 8.2) being arranged respectively at opposite ends of the guide track, the first guide wall (13), which separates the travel path and the guide track, including a passage opening (15) which is located opposite the second guide wall (14) and which is intended for the passage of a container holder (3), the self-propelled conveyor carriage (24) being configured to move a container holder (3), gripped and lifted by the gripping arms (31), through the passage opening (15) and along the guide track.

10. The biological sample treatment system according to any one of claims 1 to 9, wherein the self-propelled conveyor carriage (24) includes a support element (29) on which the gripping arms (31) are movably mounted, the support element (29) being mounted movable in translation relative to the carriage body (26) according to a travel direction which is transverse to the conveyor track and between at least a conveying position in which the self-propelled conveyor carriage (24) is configured to move a container holder (3), gripped and lifted by the gripping arms (31), along the travel path and a transfer position in which the self-propelled conveyor carriage (24) is configured to grip and lift a container holder (3) arranged in a receiving location (8) or to release and deposit a container holder (3) in a receiving location (8).

11. The biological sample treatment system according to claim 10 in combination with claim 2, wherein when the support element (29) occupies the conveying position and the gripping arms (31) occupy the gripping position, each of the gripping arms (31) projects from the lateral face (26.1) of the carriage body (26) by a first distance, and, when the support element (29) occupies the transfer position and the gripping arms (31) occupy the gripping position, each of the gripping arms (31) projects from the lateral face (26.1) of the carriage body (26) by a second distance which is larger than the first distance.

12. The biological sample treatment system according to any one of claims 1 to 11, wherein the two gripping arms (31) of the self-propelled conveyor carriage (24) are configured to occupy a first gripping position in which the two gripping arms (31) project from a first lateral face of the carriage body (26) and are configured to grip and lift a container holder (3) arranged on a first side of the conveyor track, and a second gripping position in which the two gripping arms (31) project from a second lateral face of the carriage body (26) and are configured to grip and lift a container holder (3) arranged on a second side of the conveyor track.

13. The biological sample treatment system according to any one of claims 1 to 12, wherein the self-propelled conveyor carriage (24) comprises at least one drive wheel (27) configured to roll on the carriage guide element (23), and at least one rotational drive mechanism (28) configured to drive the at least one drive wheel (27) in rotation.
